# EUROPEAN PATENT APPLICATION

(11) **EP 2 983 110 A2**
(43) Date of publication of application: **10.02.2016**
(21) Application number: 15179716.4
(22) Date of filing: 04.08.2015
(51) Int. Cl.: G06K 9/00

(54) **METHOD AND APPARATUS FOR DETERMINING OFFSIDE OR LEGAL PLAYS IN PROFESSIONAL FOOTBALL**

(30) Priority: 06.08.2014 AR P140102946
(71) Applicant: Puyol, Orlando Herminio, -1176ABZ Cuidad Autonoma de Buenos Aires (AR)
(72) Inventor: Puyol, Orlando Herminio, -1176ABZ Cuidad Autonoma de Buenos Aires (AR)
(74) Representative: Mediano Cortés, Santiago David

(57) **Abstract**

The method is based on establishing an electronic vision equivalent to human sight for detecting and reporting the offside or legal play occurring on a playing field, without the intervention of others. To that end, there has been provided an apparatus based on twelve high-definition video cameras (2), located six on each side of the field, acting as smart sensors so that, in combination with a microprocessor (6) receiving the information from said cameras, the images are processed and it is determined based on an imaginary line (4) if offside has occurred or if the play is a legal play. The microprocessor (6), together with a memory (7) and an amplifier (8), form a control unit from which the images are processed, having a modulator (9) with communication means for communicating with a minireceiver (13) for the referee.

## Description

### OBJECT OF THE INVENTION

The present invention relates to a method for determining offside or legal plays in professional football, as well as the corresponding apparatus based on using a smart optoelectronic system, which allows precisely and accurately detecting the offside or legal play, according to the Laws of the Game and Universal Guidelines for Referees published by the "Federation Internationale de Football Association" (International Federation of Association Football) (FIFA) in force, according to its Law No. 11 "Offside".

The method used by the apparatus for determining the offside or legal play in said professional sport is based on the non-intervention of any human factor, and takes into account that players do not use accessories, such as, for example: sensors on each players' body or on the ball, as occurs in the goalposts for the balls, discs or pucks used in hockey, handball, or in training sessions, among others. The electronically processed information is transmitted to the head referee of the game in order to ratify or rectify the play in question.

### PRIOR ART

Argentinean patent no. AR003666B1, granted on 4/7/2001 to the author of the present specification, discloses in detail the prior art of an intercom for sports referees, which is part of a method and apparatus for detecting goals. Likewise, the patent highlights as prior art the application filed by the Swiss company ROLEX, which uses the intercom for sports referees in its watches, according to the response received on September 4, 1984, and it was sent to experts for analysis. On the other hand, it is necessary to point out the digital animation apparatus and methods described in US patent document no. 3767901 A, among others, with new TELEBEAM system software (football version), which instantly draws on line if the play is offside or if it is a legal play; for this case, it is used exclusively by the television commentator and for spectators, and it does not interact with any device of the referees and their assistants.

Current methods for determining offside in professional football are based on the direct vision of the referees and their assistants, without any complementary control system capable of interpreting and determining the play precisely and accurately, respectively, because the intercommunication system between the referee and the assistants only contemplates the warning from former line judges through the link channel.

### DISCLOSURE OF THE INVENTION

By means of incorporating the method and apparatus object of the present invention for determining offside or legal plays in the apparatus for detecting goals of the preceding sections, interconnection with said intercommunication system allows solving an enormous drawback in sports, i.e., the lack of a control system for controlling offside and/or legal plays taking place, which normally generates serious debate among players, the media, and the general public. It is stressed that the direct vision of the referees and their assistants is not enough given the degree of discretion, and therefore mistakes are made with respect to what is described in the Laws of the Game and the Universal Guidelines for Referees in force and published by the FIFA, according to Law No. 11, and in particular, for cases in which the head referee and assistants cannot provide precision and accuracy to said plays.

Therefore, the main object of the present invention is to provide the referees with a new method and apparatus for determining offside and legal plays which has very significant advantages over everything that has been disclosed up until now.

Another objective of the present invention is to interconnect the intercommunication system of referees and their assistants existing today, unifying the apparatus for detecting goals and integrating it in the apparatus for determining offside or legal plays, electronically automating the control and verification of each play, without the intervention of others and respecting the fun part of the game, where said game does not have to be stopped to use this technology, providing reliable and instantaneous information to the head referee of the game, who could use it, depending on the circumstances of the game, to authenticate the goal, to authenticate the offside or to authenticate that the play was legal, etc. Accordingly, the apparatus for determining offside or for determining if the play is legal described in the present specification is oriented towards professional football.

More specifically, the apparatus for determining legal plays and offside, which is new electronic equipment that enhances and improves what is described in Patent no. AR003666B1, is made up of:
- A system of twelve high-resolution video cameras, six for each half of the field, strategically located to digitize the images of said playing field based on photodiode integrated circuits which become smart sensors due to the effect of specific microprocessing, which allows tracking everything enclosed in the plane belonging to the sector of each equipment divided by the line of the center circle. The solid angles crossed and projected by suitable optics contain an excess of the area required for analysis of the imaging elements.
- A microprocessor designed for detecting given objects, i.e., the ball when the play starts and the players receiving the ball in a legal position or offside, all being associated with the sensors of the high-speed cameras, simulating a smart electronic eye capable of tracking, capturing, perceiving and recognizing the movement and speed of the ball at a time in which the action is judged according to Law no. 11 according to the Laws of the Game and Universal Guidelines for Referees in force, belonging to the "Federation Internationale de Football Association" (FIFA), and if it appears in each visual field, the system is able to determine the exact location of each play. In other words, once the imaginary line formed in each play has been crossed, the offside must be detected from the moment the ball leaves, compared to the position of the player receiving it and the colleague passing it. The microprocessor has the volumetric calculation of a spherical type, which represents the professional ball for the case of football, pre-defined therein so that its control unit receives the equivalent electronic signal for that purpose from the electronic eye when it verifies that a legal play or offside has taken place.
- Once the offside or the legality of the play has been detected, the information through the control unit is stored in a duly digitized electronic memory, and an instantaneous pulse corresponding with said event is triggered with an amplifier. The pulse is an electronic signal activating a minitransmitter incorporated for that purpose, the modulator of which in the ultrahigh-frequency (UHF) band emits a compatible radio signal, producing the wireless transmission to another system independent of the apparatus for determining offside or legal play, the confirmation of each of them being provided.

In summary, the design of the apparatus is based on high-resolution video cameras that study each point of the image through a microprocessor programmed for that purpose, with a computer server containing a high-speed electronic memory and a circuit generating the imaginary line. The apparatus for determining the offside or legal play receives this information, processes it through its control unit and transmits the signal to a UHF modulator with a compatible crystal oscillator, and includes a security circuit for coding said signal for determining the offside (OFF) or the legal play (ON), which is emitted to an RF amplifier with a flexible antenna for the working frequency range and long-lasting batteries, which assure operation for the duration of the match. As an alternative, a clock which would incorporate the wireless minireceiver, which could identify offside with the word "OFF" or legal play with the word "ON" on the display, could be used.

Each play is entirely covered together with the conformation of the imaginary line, referring to the offside or the legal play being tracked based on the crossing established between fields of vision. The digital animation video server will determine the imaginary line to indicate in the wireless transmission when it is offside (offside= OFF) or when the play is legal (ON).

The cabinet of each video camera will be compact, with dimensions that allow protecting it against vibration and having vandal-proof mechanisms. The apparatus for detecting legal plays or offside must have a protective cabinet and a secure and practical installation to prevent any alteration of the plays, all of which is certified by the head referee of the game and (or) the assistants.

The apparatus for determining offside or legal plays has a low production cost, which allows its rapid introduction on the market.

Furthermore, the apparatus does not hinder incidents of the game, as it goes unnoticed by the players and the general public.

### DESCRIPTION OF THE DRAWINGS

To complement the description made below and to help better understand the features of the invention according to a preferred practical embodiment thereof, a set of drawings is attached as an integral part of said description, in which the following has been depicted with an illustrative and non-limiting character:
Figure 1 shows a depiction corresponding to a schematic block diagram of an apparatus for determining offside or legal play made according to the object of the present invention.
Figure 2 shows a diagram corresponding to the practical application of the apparatus of the invention.

### PREFERRED EMBODIMENT OF THE INVENTION

As can be seen in the mentioned drawings, it can be observed how the apparatus of the invention is based on placing twelve video cameras (2) on a football field (1), said cameras (2) being high-resolution and being arranged on said football field (1) such that they are strategically located to digitize the images based on photodiode integrated circuits, which become smart sensors due to the effect of specific microprocessing, which allows tracking everything enclosed in the plane corresponding to the sector of each equipment divided by the line (3) of the center circle.

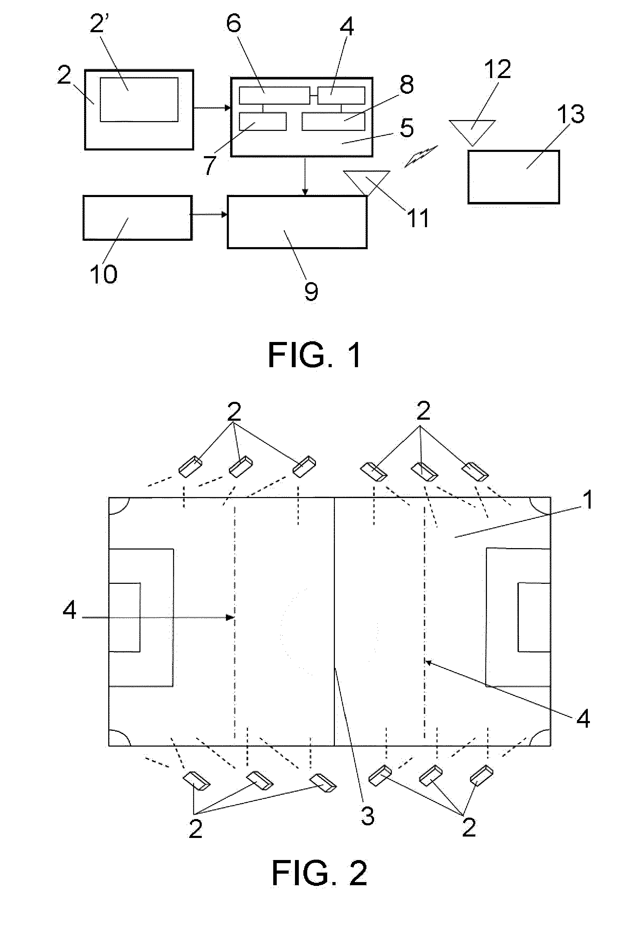

The imaginary lines (4) established in each of the halves of the playing field (1) can also be observed, as depicted in Figure 2.

In Figure 1, the video camera (2) which can be considered as a smart electronic eye (2'), emits the captured images to a server (5) with a microprocessor (6) designed for detecting given objects, i.e., the ball when the play starts and the players receiving the ball in a legal position or offside, all this being associated with the sensors of the high-speed or high-definition cameras (2), simulating a smart electronic eye (2') capable of tracking, capturing and perceiving or recognizing the movement and speed of the ball at the time in which the action is judged.

Thus, once the corresponding imaginary line (4) formed in each play has been crossed, "offside" must be detected from the moment the ball leaves, compared to the position of the player receiving it and the colleague passing it, such that the microprocessor (6) defines the volumetric calculation of a spherical type, which represents the ball, so that its control unit or server (5) receives the equivalent electronic signal for that purpose from the electronic eye (2') when it verifies that a legal play or, in contrast, offside has taken place.

Once the of the offside or the legality of the play has been detected, the information through that control unit (5) is stored in a duly digitized electronic memory (7), and an instantaneous pulse corresponding with said event is triggered with an amplifier (8), said pulse corresponding to an electronic signal activating a minitransmitter incorporated in the modulator (9) in the ultrahigh-frequency UHF band, emitting a compatible radio signal to produce a wireless signal to another system independent of the apparatus for determining the offside or legal play.

Figure 1 shows a crystal oscillator (10) associated with the modulator (9) and communicating through the corresponding antenna (11) with a radio frequency minireceiver (13) with its corresponding antenna (12) for the referee.

## Claims

1. A method for determining offside and legal plays in professional football, **characterized in that** it consists of establishing an electronic vision equivalent to human sight for detecting and reporting the offside or legal play without the intervention of others, an imaginary line of scrimmage being established by means of a digital animation video server in order to obtain the image of each half of the playing field with respect to the plane of said line and of the play, with an evaluation and analysis based on visual field microprocessing, and determining whether or not it is offside or a legal play; generating an equivalent electronic signal for the previous determination, with processing based on memorizing the image of the play, computing it and sending it to a radio frequency broadcast, integrated for that purpose; radio communication to a minireceiver of the head referee of the game then being performed, exclusively, with a sound, acoustic and/or visual tone reporting whether the play is offside (OFF) or whether the play is legal (ON), to allow said referee to ratify or rectify the validity of the play.

2. An apparatus for determining offside or legal plays in professional football, **characterized in that** it comprises a set of video cameras with imaging elements acting as smart sensors located in the structure of the playing field; a microprocessor receiving the information converged from said imaging elements and programmed for determining whether the ball came from a teammate from whom the ball is received according to the imaginary line generated by an animation video server, capable of tracking, perceiving, recognizing and capturing the movement and speed thereof at a given time during the play, these being the means determining a visual field detecting the exact location when the offside or legal play takes place; a generator transferring the OFF or ON information produced in an electronic signal; a memory storing said electronic signal; a meter computing the information about what has taken place; an amplifier processing said electronic signal to an ultrahigh-frequency modulator; a minitransmitter emitting said electronic signal in radio form and wirelessly to the head referee of the game, so as to allow validating the offside play or legal play taking place.

3. The apparatus for determining offside or legal plays in professional football according to claim 2, **characterized in that** it includes means for emitting a wave carrying an ultrahigh frequency, with the sound, acoustic and/or visual tone corresponding to the offside or legal play taking place, as well as coding means based on encryption to prevent electromagnetically transmitted information from being altered.

4. The apparatus for determining offside or legal plays in professional football according to claim 2, **characterized in that** it includes means for operating electronically and automatically, without manual intervention of the assistants of the head referee.

5. The apparatus for determining offside or legal plays in professional football according to claim 2, **characterized in that** it is interconnected with an animation video server, and an interconnection with the twelve high-resolution and frame rate video cameras which assures the focus on the imaginary line, which are protected with vandal-proof cabinets to prevent them from being dislodged due to blows and/or from emitting errors due to misalignments.
